# EUROPEAN PATENT APPLICATION

(11) **EP 2 460 931 A1**
(43) Date of publication of application: **06.06.2012**
(21) Application number: 11190155.9
(22) Date of filing: 22.11.2011
(51) Int. Cl.: D06M 15/21, D06M 15/263, D06M 15/327, D06M 15/333, D06M 17/06, D06P 5/00, C09D 123/00, C09D 133/00, D06N 3/00

(54) **Heat transferable protective film intended for coating labels obtained through digital printing.**

(30) Priority: 01.12.2010 IT VI20100326
(71) Applicant: Siser S.r.l., 36100 Vicenza (IT)
(72) Inventor: Canacci, Alessandro, 36043 Camisano Vicentino (Vicenza) (IT); Pellegrini, Ugo, 31100 Treviso (IT)
(74) Representative: Bettello, Pietro

(57) **Abstract**

The present finding concerns a heat transferable protective film intended for coating labels obtained through digital printing, previously printed and already transferred onto garments so as to embellish or personalise the item. Such a film is characterised in that it is made of acrylic polymers, vinyl copolymers, a filler and adhesion promoters.

## Description

The present finding concerns a heat transferable protective film intended for coating labels obtained through digital printing, previously printed and already transferred onto garments so as to embellish or personalise the item.

The technologies that are currently available for the textile market foresee the use of products that are mainly liquid which stick to the material modifying its appearance and feel.

The finding, which is in the form of film, sticks to labels printed above the item exclusively and not to the fabric thereof, thus leaving the characteristics of the fibre unaltered.

The film is transferred through hot pressing (professional press or iron) and not through wet deposition or through calendering.

As documents of the State of the Art we quote the following patent documents. It should be premised that the aforementioned documents do not have anything in common with the film according to the finding, both in terms of application methods, and in terms of their intended use. In particular it should be remembered that our finding is in the form of a film and it is intended for labels previously printed and transferred on to garments. Moreover, our finding is capable of recognising the fabric without sticking to it, but just attaching onto the aforementioned label. In particular:
- document WO A 93/13165 describes a conventional liquid application for the paper industry;
- document EP A 0890673 concerns an application of a film using heat through industrial calendering, with the purpose of sticking onto printed fabrics;
- document US A 4845144 describes a conventional liquid application which deliberately sticks to the glass fibres for the field of the textile industry of sheets that are suitable for use in conveyor belts;
- document WO A 01/34387 describes a conventional liquid application which deliberately sticks to fabrics or cloth;
- document EP 0057813 also describes a conventional liquid application and it is intended for protecting work material made up of synthetic fibres;
- document US 4141873 concerns a conventional liquid application intended for protecting different types of supports;
- finally, document DE 3444862 also describes a conventional liquid application carried out on covering fabrics to be used on flexible webs.

The use of liquid applications previously described ensures that products which stick to the fabrics are applied substantially modifying the appearance and the feel after being applied.

At the current state of the art, regardless of the applications described in the aforementioned documents, which, as fully explained previously, concern a technical field that is different from that concerning the present finding, the application of a protective film according to the State of the Art is carried out through the following modalities:
1- firstly the digital printing, be it the representation of a single subject, or made up of a plurality of fragments that are unevenly distributed, is transferred onto the garment with manual or semiautomatic press at the following conditions: 3" to 175° C, with pressure of 1 - 2 bar;
2- a sheet of protective film, which has greater dimensions with respect to those of pressing and is pressed for 30" at 175° C, with a pressure of 1 - 2 bar;
3- after everything has cooled down the support of the protective film is removed. The material is only transferred to the digital print and not also above the fabric.

Once the operation has finished it is possible to see the exact application of the film on the label: differently from the film at the fabric which stays attached to the paper support, the film at the label perfectly separates from the support. The purpose of the present finding is that of making a protective film for coating a material intended for digital printing, such a film being suitable for being applied to said material after it has been previously applied onto the garment.

In particular the application of the film must be simple also for workers without any particularly expertise. Such a film must be able to be used in any moment and over fibres of different kinds, for example textiles like cotton, as well as of the plastic type such as polyester, cotton-polyester mixes and nylon. All must be carried out without there being sticking in the fabric of the textile item while leaving the appearance and the feel unaltered.

All this is obtained, according to the finding, thanks to a protective film made up of a mixture made up of acrylic polymers, vinyl copolymers and filler that are already known for their anti-abrasive characteristics.

In particular, according to a preferred embodiment, such a mixture has the following formula:
- acrylic polymers 60% - 70%
- vinyl copolymers 20% - 40%
- filler 10% - 20%

Advantageously, the basic weight of this mixture ranges from 3 to 16 g/m2 . Such a film is arranged on a carrier (support) which can be of any nature (for example paper, PET, etc.) as long as it is made of a heat resistant material up to 200° C. The carrier is coupled to a polyolefin film and the overall basic weight has values of between 70 and 220 g/m².

The mixture can be deposited according to the following modalities:
1. depositing through spreading with the help of a doctor blade;
2. spraying;
3. depositing through impression cylinders;
4. using a glazing machine: the material is deposited by gravity in the form of a very thin film of liquid mixture.

The film according to the finding must be used over the digital print previously transferred onto the garment. The special feature of the finding is that it only attaches to the digital material, without fixing itself to the underlying fabric, perfectly outlining the perimeter of the print itself.

The film according to the finding, after being transferred through a hot press above the digital material, protects the digital print from abrasion phenomena and prevents it from having the colour come out when being washed in washing machines even at temperatures of 92 ± 3°C.

Many tests have been carried out on the film according to the finding, in particular on cotton, polyester and nylon fabrics, which have made it possible to verify that the finding had no effect on said fabrics. Also wash resistant tests were carried out and obtained extremely positive results.

The washing tests were carried out with a washing machine set according to the following instructions:
a) UNI EN ISO 6330:2002.
b) Wascator 365 H machines. Front-loading, horizontal drum.
c) Washing process for machines with a drum with a horizontal axis - TIPO 1A^{h} (92 ± 3)° C.
d) Drying process on a clothes line.
e) Type of washing powder: IEC (with optical whitener).
f) Ballast overall mass: 4.5 kg. Mass of the sample tubes: 0.5 Kg.
g) Ballast material used: textured polyester 100% with surface mass density of (312.5± 20) g/m². The pieces are square-shaped and are (20 ± 4) cm in size.

Each test piece must weigh (50 ± 5) g.

The rubbing fastness tests were carried out with a CROCKMETER according to standard ISO 105 - X12.

In particular the film according to the finding is transferred through hot pressing, in particular through a professional press or a common iron and not through wet calendering deposition like in the documents previously described. For its versatility the film according to the finding is intended for small manufacturing companies, leaving wide space to the creativity of personalised prints which can also be protected at a later moment.

## Claims

1. HEAT TRANSFERABLE PROTECTIVE FILM INTENDED FOR COATING LABELS OBTAINED THROUGH DIGITAL PRINTING, previously printed and already transferred on garments so as to embellish or personalise the item, the film being **characterised in that** it consists of a mixture made up of acrylic polymers, vinyl copolymers, a filler and adhesion promoters.

2. FILM, according to claim 1, **characterised in that** it consists of a mixture having the following composition:
| | |
|---|---|
| - acrylic polymers | 60% ÷ 70% |
| - vinyl copolymers | 20% ÷ 30% |
| - filler | 5% ÷ 10% |
| - adhesion promoters | 1% ÷ 5%. |

3. FILM, according to claim 1 or 2, **characterised in that** it has a basic weight ranging from 3 to 16 g /m².

4. FILM, according to claim 1 or 2, **characterised in that** it is supposed to be placed on a carrier made of a heat resistant material up to 200° C.

5. FILM, according to claim 3, **characterised in that** the carrier is coupled to a polyolefin film.

6. FILM, according to claim 4, **characterised in that** the assembly consisting of the carrier and the polyolefin film has a basic weight ranging from 70 to 220 g / m².

7. FILM APPLICATION, according to one or more of claims 1 to 6, **characterised in that** it is carried out by spreading.

8. FILM APPLICATION, according to one or more of claims 1 to 6, **characterised in that** it is carried out by spraying.

9. FILM APPLICATION, according to one or more of claims 1 to 6, **characterised in that** it is carried out by laying employing impression cylinders.

10. FILM APPLICATION, according to one or more of claims 1 to 6, **characterised in that** it is carried out by a glazing machine.

11. APPLICATION PROCESS OF A HEAT TRANSFERABLE PROTECTIVE FILM INTENDED FOR COATING LABELS OBTAINED THROUGH DIGITAL PRINTING, carried out according to one or more of claims 1 to 6, **characterised in that** such a film is applied to said material after it has been previously printed and transferred onto the garment through heat.
